# EUROPÄISCHE PATENTSCHRIFT

(11) **EP 1 721 152 B1**
(45) Veröffentlichungstag und Bekanntmachung des Hinweises auf die Patenterteilung: **25.01.2012**
(21) Anmeldenummer: 05734845.0
(22) Anmeldetag: 01.03.2005
(51) Int. Cl.: G01N 29/22

(54) **Vorrichtung und Verfahren zur Bewitterung und gleichzeitigen Ultraschallanalyse von Proben**
Device and method for weathering and simultaneously performing ultrasound analysis on samples
Dispositif et procédé pour réaliser simultanément une exposition à des intempéries et une analyse aux ultrasons sur des échantillons

(30) Priorität: 02.03.2004 DE 102004010128
(43) Veröffentlichungstag der Anmeldung: 15.11.2006
(73) Patentinhaber: Atlas Material Testing Technology GmbH, 63589 Linsengericht/Altenhasslau (DE)
(72) Erfinder: BOXHAMMER, Jörg, 64807 Dieburg (DE); LELLINGER, Dirk, 64331 Weiterstadt-Braunshardt (DE); OEHLER, Harald, 65830 Kriftel (DE); ALIG, Ingo, 64331 Weiterstadt-Braunshardt (DE)
(74) Vertreter: Graf Lambsdorff, Matthias
(86) Internationale Anmeldenummer: PCT/DE2005/000343
(87) Internationale Veröffentlichungsnummer: WO 2005/085833

(56) Entgegenhaltungen:
- EP-A- 0 857 963
- DE-A1- 4 109 469
- DE-A1- 19 839 009
- GB-A- 2 027 887
- US-A- 5 854 433
- US-B1- 6 247 366
- CHABIRA S F ET AL: "Anisotropic character and ultrasonic stiffness changes during the natural weathering of LDPE films" J. APPL. POLYM. SCI.; JOURNAL OF APPLIED POLYMER SCIENCE OCT 10 2003, Bd. 90, Nr. 2, 10. Oktober 2003 (2003-10-10), Seiten 559-564, XP002333049

## Beschreibung

Die vorliegende Erfindung betrifft ein Bewitterungsgerät zur künstlichen Bewitterung von Proben und zur simultanen Durchführung von Ultraschallanalyseverfahren.

Viele organische und anorganische Materialien, insbesondere Polymermaterialien und andere Kunststoffe, sind bei ihrer Anwendung der freien Witterung ausgesetzt, so dass ihre Widerstandsfähigkeit gegen Bewitterungseinflüsse ein wichtiges Qualitätskriterium ist. Daher stellt die Vorhersage des Alterungsverhaltens von polymeren Werkstoffen unter dem Einfluss von Sonnenstrahlung, Temperatureinflüssen, Regen und Feuchtigkeit, Chemikalien oder Industrieabgasen eine wichtige Herausforderung bei der Entwicklung neuer Materialien, wie zum Beispiel Kunststoffe, dar. Die sichersten Aussagen über ihre Widerstandsfähigkeit erhält man durch Freibewitterungen und anschließende Prüfung der relevanten Eigenschaften. Obwohl solche Freibewitterungen unter extremen Klimabedingungen wie z.B. in Florida oder Arizona durchgeführt werden, sind sie sehr zeitaufwändig (zum Teil über mehrere Jahre) und sehr kostspielig. Spezielle Verfahren zur Prüfzeitverkürzung (Intensivierung der Klimaparameter - Fokussierung der Sonnenstrahlung, Erhöhung der Temperatur, Intensivierung der Befeuchtung und andere) werden zum Teil bereits in der Freibewitterung angewendet. Eine definierte Zeitraffung bei gleichzeitiger Durchführung der Versuche unter "kontrollierten Bedingungen" ist jedoch nur durch eine Simulation der natürlichen Bewitterungsvorgänge (unter Ausnutzung des 24-Stunden-Tages) im Labor möglich. In entsprechenden Bewitterungsvorrichtungen wird eine größere Anzahl Proben (abhängig von der Gerätekapazität) einer definierten Strahlungs- (zumeist Xenonstrahlung) und darüber hinaus periodisch wechselnden Temperatur- und Feuchtebelastungen ausgesetzt. Für die Nachstellung der spektralen Energieverteilung der Sonnenstrahlung, vor allem im fotochemisch wichtigsten UV-Bereich der Strahlung, werden in solchen Bewitterungsvorrichtungen als Strahlungsquelle zumeist Xenonstrahler eingesetzt. Die zeitraffende Alterungsprüfung der Werkstoffe wird im Wesentlichen durch eine gegenüber den natürlichen Verhältnissen stark intensivierte Bestrahlung der Proben erzielt (bis zum 10-fachen der natürlichen Sonnenstrahlung), wodurch die Alterung der Proben beschleunigt wird.

Einer weiteren Steigerung der künstlichen Beschleunigung der Alterungsvorgänge steht ein prinzipielles Problem entgegen. Die aus ökonomischen Gründen gewünschten kürzeren Prüfzeiten werden durch weiter intensivierte und damit unnatürliche Belastungen der Probe erkauft. Hierbei besteht die Gefahr, dass Alterungsvorgänge initiiert werden, die im Freien nicht auftreten. Durch verstärkte Intensivierung der Wetterparameter und Verkürzung der Belastungszyklen lassen sich die Alterungsvorgänge somit nicht beliebig beschleunigen, da die physikalischen oder chemischen Vorgänge im Material (z.B. Diffusion, Wärmeleitung, Reaktionskinetik) spezifische Zeitabhängigkeiten aufweisen. Hinzu kommt das komplexe Zusammenwirken der verschiedenen Einflussfaktoren wie Strahlung, Wärme, Feuchtigkeit, Chemikalien und Sauerstoff. Gerade zum Wechselspiel verschiedener Faktoren gibt es bisher nur wenige systematische Untersuchungen.

Nach der simulierten Bewitterung werden die Proben mit konventionellen Prüfverfahren, wie z.B. mechanischen Prüfungen, untersucht. Die Simulation der Bewitterung und die messtechnische Erfassung der relevanten Materialparameter erfolgen somit diskontinuierlich. Die Proben werden dazu dem Bewitterungsgerät entnommen und den Prüfgeräten ("Offline") zugeführt. Zur Bewertung der Materialschädigung nach der simulierten Bewitterung werden verschiedene Analyseverfahren, wie z.B. visueller Vergleich mit Referenzmaterialien, Trübungsmessungen, Messungen der mechanischen Eigenschaften (bspw. Zugversuch oder Schlagpendelexperiment), Farbmessungen, Untersuchungen mit automatischer Bildverarbeitung sowie analytische Methoden (inklusive Spektroskopie) angewendet. Die Auswahl des Analyseverfahrens hängt von den geforderten Anwendungseigenschaften des Materials bzw. Bauteils ab.

Die bisherige Vorgehensweise bei der Probenbewitterung und der messtechnischen Analyse ist in mehrfacher Hinsicht von Nachteil. Ein wesentlicher Nachteil besteht darin, dass für eine hinreichende Aussagekraft der oben genannten konventionellen "Offline"-Analyseverfahren bereits eine signifikante makroskopische Schädigung der Proben durch die Bewitterung herbeigeführt werden muss. Demzufolge betragen typische Prüfzeiten in Bewitterungsvorrichtungen bis zu mehreren tausend Stunden, wodurch der Durchsatz der Bewitterungsvorrichtungen in erheblichem Maße begrenzt wird. Ein weiterer Nachteil ergibt sich daraus, dass - wie oben ausgeführt - bei relativ langen Prüfzeiten mit intensiven Belastungen der Probe durch komplexes oder nicht-lineares Zusammenwirken der verschiedenen Einflussgrößen der Schädigungsverlauf ebenso nicht-linear und damit unrealistisch beeinflusst wird. Somit ist die Aussagekraft der mit den Prüfverfahren festgestellten Schädigungen begrenzt, da stets die Möglichkeit besteht, dass innerhalb der relativ langen Prüfzeiten Alterungsvorgänge stattgefunden haben, die unter natürlichen Bewitterungsverhältnissen nicht eingetreten wären. Ein weiterer Nachteil der bisherigen diskontinuierlichen Abfolge von Bewitterung und messtechnischer Analyse ist schließlich noch darin zu sehen, dass es nicht möglich ist, Entstehung und Verlauf von Schädigungen zu dokumentieren, da diese nur nach Ablauf einer langen Prüfzeit als makroskopische Schädigungen festgestellt werden. Ein weiterer Nachteil besteht in dem relativ hohen Prüfaufwand der "Offline-Messungen" infolge der Bereitstellung einer Mehrzahl von Prüfapparaturen mit jeweils begrenzten Durchsatzkapazitäten und der Durchführung der Messungen an diesen.

Die Druckschrift US-A-5,854,433 beschreibt ein Bewitterungsprüfgerät, bei welchem innerhalb einer Bewitterungskammer ein sich um eine vertikale Achse, entlang der die Strahlungsquelle angeordnet ist, drehbares Gestell angeordnet ist, an welchem die zu bewitternden Proben gehaltert werden können. Die Proben werden im Anschluss an einen Bewitterungsvorgang aus der Bewitterungskammer entnommen und mit den gängigen Verfahren analysiert.

Die Publikation "Anisotropic character and ultrasonic stiffness changes during the natural weathering of LDPE films" in J. APPL. POLYM. SCI.; JOURNAL OF APPLIED POLYMER SCIENCE OCT 10, 2003, Bd. 90, Nr. 2, 10. Oktober 2003 (2003-10-10) Seiten 559-564, XP002333049, von Chabira S. F. et al. beschreibt Untersuchungen zur Freibewitterung und zur künstlichen Bewitterung von Polyethylen-Filmen bei gleichzeitiger Durchführung eines Ultraschall-Analyseverfahren. Die Proben sind während der Bewitterung stationär gehaltert.

Die Druckschrift DE 198 39 009 A1 beschreibt ein Messgerät zur Untersuchung der Wechselwirkung zwischen Flüssigkeit und flächigen Werkstoffen, in welchem bei einseitigem Flüssigkeitskontakt einer Materialprobe eine gleichzeitige Ultraschall-Reflexionsmessung durchgeführt werden kann. Es wird weiterhin ausgeführt, dass ein derartiges Messgerät innerhalb einer Klimakammer angeordnet werden kann, wobei die Proben stationär gehaltert werden.

Es ist demzufolge Aufgabe der vorliegenden Erfindung, ein Bewitterungsgerät zur künstlichen Bewitterung von beweglich gehalterten Proben anzugeben, mit welchem innerhalb kürzerer Prüfzeiten differenziertere Aussagen über das Alterungsverhalten von Proben unter Bewitterungseinflüssen gemacht werden können. Insbesondere ist es Aufgabe der vorliegenden Erfindung, den Eintritt bestimmter Schädigungen der Proben frühzeitiger zu diagnostizieren.

Diese Aufgabe wird durch die Merkmale des Patentanspruchs 1 gelöst. Vorteilhafte Weiterbildungen und Ausgestaltungen sind Gegenstand von Unteransprüchen.

Die vorliegende Erfindung bezieht sich dementsprechend auf ein Bewitterungsgerät zur künstlichen Bewitterung von Proben und zur simultanen Durchführung von Ultraschallanalyseverfahren zur Feststellung der Veränderung von Eigenschaften der Probe und/oder der Probenoberflächen und/oder innerer oder äußerer Grenzflächen.

Der Erfindung liegt somit zunächst die wesentliche Erkenntnis zugrunde, dass ein möglicher Weg für eine bessere und schnellere Vorhersage des Alterungsverhaltens von Proben die Entwicklung von Test- und Analyseverfahren ist, die eine Messung der relevanten Materialeigenschaften bereits während der simulierten Bewitterung ("Inline") ermöglichen. Während der Einwirkung von Strahlung, Temperatur, Wasser/Feuchtigkeit, Chemikalien, Sauerstoff usw. werden in dem "Inline-Messverfahren" bestimmte Ultraschallmessgrößen, wie Signalamplituden, Signalformen, Reflexions- und Transmissionskoeffizienten, Laufzeiten, Phasenverschiebungen, Resonanzfrequenzen, Halbwertsbreiten und abgeleitete Größen, wie mechanische Moduln, der zu untersuchenden Probe und/oder deren Probenoberflächen und/oder innerer oder äußerer Grenzflächen aufgezeichnet. Somit sind frühzeitig, also lange bevor mit herkömmlichen Methoden eine Schädigung detektiert werden kann, Alterungsvorgänge der Proben nachweisbar. Weiterhin können Schädigungen direkt zum Zeitpunkt des Auftretens detektiert werden. Die Aufzeichnung des Zeitverhaltens der akustischen Parameter während relativ kurzer Belastungszeiten, bzw. nach wenigen Belastungszyklen, sollte es ermöglichen, auf das Langzeitverhalten des Materials zu extrapolieren. Ein wesentlicher Vorteil einer simultanen Messung der Ultraschallparameter während der Bewitterung besteht also in der frühzeitigen Erkennung von Veränderungen wesentlicher anwendungsrelevanter Werkstoffeigenschaften, insbesondere mechanischer Eigenschaften. Ein weiterer Vorteil einer "Inline"-Messung besteht in der Verkürzung der Bewitterungszeiten. Ein weiterer Vorteil besteht in der Verringerung des hohen Prüfaufwandes bei "Offline"-Messungen der Werkstoffeigenschaften, womit schon für sich genommen ein erheblicher wirtschaftlicher Effekt verbunden ist.

Es ist bereits bekannt, dass Ultraschallverfahren zur Messung der Eigenschaften von Beschichtungen gut geeignet sind. Insbesondere die Laufzeiten und Amplituden der Ultraschallwellen, akustische Reflexionskoeffizienten oder Phasenwinkel und abgeleitete Größen, wie mechanische Moduln von Polymermaterialien können mit Ultraschallverfahren sehr schnell und mit hoher Präzision bestimmt werden.

Ein wesentlicher Gedanke der vorliegenden Erfindung besteht also darin, eine Bewitterung einer Probe zur Feststellung ihres witterungsbedingten Alterungsverhaltens durchzuführen und gleichzeitig mittels eines Ultraschallanalyseverfahrens eine Veränderung von Eigenschaften der Probe und/oder der Probenoberflächen und/oder innerer oder äußerer Grenzflächen festzustellen. Die Durchführung von Ultraschallanalyseverfahren an den bewitterten Proben kann vorteilhafterweise kontinuierlich oder gewissermaßen quasi-kontinuierlich, also zeitaufgelöst, d.h. an diskreten, dicht aufeinander folgenden Zeitpunkten, erfolgen. Ein weiterer wichtiger Vorteil von Ultraschallanalyseverfahren besteht in ihrer Zerstörungsfreiheit gegenüber den konventionellen "Offline"-Prüfverfahren, die oftmals mit einer Beeinträchtigung oder Zerstörung der Probe einhergehen.

Künstliche Bewitterung umfasst sämtliche heute bekannten Verfahren zur beschleunigten (künstlichen) Exposition mit Strahlenquellen wie Xenonstrahlern, Fluoreszenzstrahlern, speziellen Metallhalogenidstrahlern sowie Kohlebogenstrahlern und mit Filtersystemen, die eingesetzt werden, um Anpassungen der Spektralverteilungen vorzunehmen. Freibewitterung, welche nicht zur vorliegenden Erfindung gehört, umfasst alle üblichen Verfahren zur Exposition im Freien unter natürlichen Bedingungen, so z.B. auch die unter den Stichworten "Belichtung hinter Fensterglas" und "Belichtung unter speziellen anwendungsspezifischen Bedingungen" sowie "Maßnahmen zur Beschleunigung der Alterung" (z.B. intensivierte Strahlung, erhöhte Temperatur) bekannten Freibewitterungsverfahren. Die Erfindung bezieht sich dabei auch auf Bewitterungsbedingungen, die eine extrem ehöhte Intensität einzelner oder mehrerer Wetterfaktoren beinhalten. Diese ebenfalls an sich bekannte Anwendung ist zwar zumeist sehr werkstoff- und eigenschaftspezifisch, kann aber unter speziellen Bedingungen sehr interessant sein und zu sehr kurzzeitigen Alterungsabläufen führen, bei denen eine diskontinuierliche Bestimmung von Eigenschaften zu unerwünschten, den Alterungsablauf direkt beeinflussenden Prozessen führt. Hier ist eine Inline-Messung in sehr kurzen Zeitabständen zwingend erforderlich.

Die festzustellenden Eigenschaften beziehen sich, wie bereits angedeutet, auch auf Eigenschaften, die die Grenzflächen der Probe betreffen. Insbesondere sind hierbei die Eigenschaften einer Grenzfläche einer Probe zu einem Substrat und die Hafteigenschaften zu dem Substrat von Interesse, um Ablösungstendenzen von schichtförmigen Proben von einem Substrat oder zwischen verschiedenen Schichten oder Einschlüssen in der Probe frühzeitig zu erkennen.

Eine erfindungsgemäße Vorrichtung zur Bewitterung einer Probe umfasst demzufolge insbesondere eine Ultraschallanalyse-Einrichtung, welche mindestens einen Ultraschallwandler zum Aussenden und/oder Empfangen von Ultraschallwellen aufweist.

In einer ersten, grundlegenden Ausführungsform weist die Ultraschallanalyse-Einrichtung genau einen Ultraschallwandler zum Aussenden von Ultraschallwellen in Richtung auf die Probe und zum Empfangen von von der Probe reflektierten Ultraschallwellen auf.

In einer zweiten, grundlegenden Ausführungsform weist die Ultraschallanalyse-Einrichtung einen ersten Ultraschallwandler zum Aussenden von Ultraschallwellen und einen zweiten Ultraschallwandler zum Empfangen von Ultraschallwellen auf.

Die erste Ausführungsform kann so ausgebildet sein, dass die Vorrichtung eine Messzelle mit einem Bodenteil und Seitenteilen aufweist, wobei in dem Bodenteil eine Bohrung für den Einsatz des Ultraschallwandlers enthalten ist, und in die Messzelle gegenüberliegend dem Bodenteil eine flächige Probe oder ein die Probe tragendes flächiges Substrat in die Seitenteile einsetzbar ist. Zwischen dem eingesetzten Ultraschallwandler und der eingesetzten Probe kann in die Messzelle ein Koppelmedium, insbesondere eine Koppelflüssigkeit, angeordnet sein.

Die erste Ausführungsform kann alternativ auch so ausgebildet sein, dass die Vorrichtung eine Messzelle mit einem zylindrischen, insbesondere aus (Quarz-)Glas gebildeten Hauptkörper aufweist, auf dessen erster Grundfläche der Ultraschallwandler aufgebracht ist und dessen zweite Grundfläche als Aufnahmefläche für die Probe dient.

Die zweite Ausführungsform kann so ausgebildet sein, dass die Vorrichtung eine Messzelle mit einem insbesondere aus (Quarz-)Glas gebildeten Hauptkörper enthält, welcher zwei gegenüberliegende Hauptoberflächen aufweist, deren eine als Aufnahmefläche für die Probe dient, und welcher zwei die Hauptoberflächen verbindende abgeschrägte Seitenflächen aufweist, auf denen die zwei Ultraschallwandler aufgebracht sind.

In den erfindungsgemäßen Bewitterungsgeräten mit ortsveränderlichen Proben sind diese beispielsweise an einem rotierenden Probengestell befestigt, welches sich mit konstanter Geschwindigkeit um eine UV-Strahlungsquelle dreht, wobei die Proben ebenfalls ständig der UV-Strahlungsquelle zugewandt sind.

In den erfindungsgemäßen Bewitterungsgeräten mit ortsveränderlichen Proben kann dagegen vorgesehen sein, dass die Erzeugung und/oder Wandlung von Ultraschall innerhalb der Bewitterungskammer erfolgt und die elektrischen Signale, die entweder in auszusendenden Ultraschall zu wandeln sind oder die aus empfangenem Ultraschall gewandelt wurden, in geeigneter Weise in die Bewitterungskammer eingekoppelt oder aus dieser ausgekoppelt werden.

In einem erfindungsgemäßen Bewitterungsgerät mit ortsveränderlichen Proben sind in einer Wand der Bewitterungskammer Durchführungen für elektrische Leitungen für die Zu- oder Abführung von elektrischen Signalen für die Ultraschallwandlung innerhalb der Bewitterungskammer vorzusehen.

Allgemein gesagt umfasst das erfindungsgemäße Bewitterungsgerät eine Bewitterungskammer mit einer UV-Strahlungsquelle zur Bestrahlung der Proben mit UV-Strahlung, wobei jeder Probe mindestens ein Ultraschallwandler zugeordnet ist und die Proben innerhalb der Bewitterungskammer derart anordenbar sind, dass sie sowohl der UV-Strahlungsquelle zugewandt sind als auch mit der Ultraschallstrahlung des Ultraschallwandlers analysiert werden können. Dabei kann die Probe mit einer ihrer Oberflächen der UV-Strahlungsquelle zugewandt sein und die Ultraschallwellen können auf einer ihrer anderen Oberflächen auf die Probe auftreffen und/oder in sie eindringen. Dabei kann jede einzelne Probe insbesondere auf einem Substrat angeordnet sein, wobei dann die freie Oberfläche der Probe der UV-Strahlungsquelle zugewandt ist und die Ultraschallwellen durch das Substrat zu der Probe und von der Probe weg gelangen.

Der erfindungsgemäß verwendete Begriff Bewitterung kann auch in einem umfassenderen Sinne verstanden werden, wobei nicht notwendigerweise eine UV-Bestrahlung vorgesehen ist, sondern jedwede Einwirkungen von Strahlung (jedweder Art) und/oder Wärme und/oder Feuchtigkeit und/oder Chemikalien (jedweder Art) und/oder Sauerstoff darunter verstanden werden sollen. Die Erfindung wird im Folgenden anhand von Ausführungsbeispielen in Verbindung mit den beigefügten Zeichnungsfiguren näher erläutert. Es zeigen:
- Fig. 1a, b: ein erstes Ausführungsbeispiel für eine mit der erfindungsgemäßen Vorrichtung zu koppelnde Messzelle (1a) und ein Zeitdiagramm für die gemessenen elektrischen Signale (1b);
- Fig. 2: ein zweites Ausführungsbeispiel für eine mit der erfindungsgemäßen Vorrichtung zu koppelnde Messzelle mit angeschlossener Steuer- und Auswerteelektronik;
- Fig. 3: ein drittes Ausführungsbeispiel für eine mit der erfindungsgemäßen Vorrichtung zu koppelnde Messzelle mit angeschlossener Steuer- und Auswerteelektronik;
- Fig. 4: ein viertes Ausführungsbeispiel für eine mit der erfindungsgemäßen Vorrichtung zu koppelnde Messzelle auf der Basis der Ultraschalltransmission mit angeschlossener Steuer- und Auswerteelektronik; und
- Fig. 5: ein nicht zur Erfindung gehörendes Ausführungsbeispiel für eine erfindungsgemäße Vorrichtung in der Form eines Bewitterungsgeräts mit ortsfesten Proben enthaltend Wandöffnungen für die Aufnahme von zwei Messzellen gemäß dem zweiten Ausführungsbeispiel (Fig.2); und
- Fig.6a,b: ein Ausführungsbeispiel für eine erfindungsgemäße Vorrichtung in der Form eines Bewitterungsgeräts mit ortsveränderlichen Proben in perspektivischer Ansicht (a) und in einer Draufsicht (b).

Es wird darauf hingewiesen, dass die für die vorliegende Erfindung relevanten Ultraschallanalyseverfahren in dem Buch "Handbuch der Kunststoffprüfung" (Herausgeber Heinz Schmiedel, Carl Hanser Verlag München Wien, 1992) beschrieben worden sind. Die verschiedenen Reflexions- und/oder Transmissionsverfahren, insbesondere das Impuls-Echo-Verfahren, und die zugehörigen Auswerteverfahren, insbesondere die Fourier-Transformations-Technik, zur Ermittlung der Schallgeschwindigkeit, der Schallabsorption und -reflexion und des Real- und Imaginärteils der komplexen akustischen Impedanz und von mechanischen Größen wie Longitudinal- und Schubmodul (sowie daraus berechneten Größen wie Kompressionsmodul, Elastizitätsmodul und Querkontraktionszahl) können als dem Fachmann bekannt vorausgesetzt werden und sollen hier nicht mehr im Detail erläutert werden.

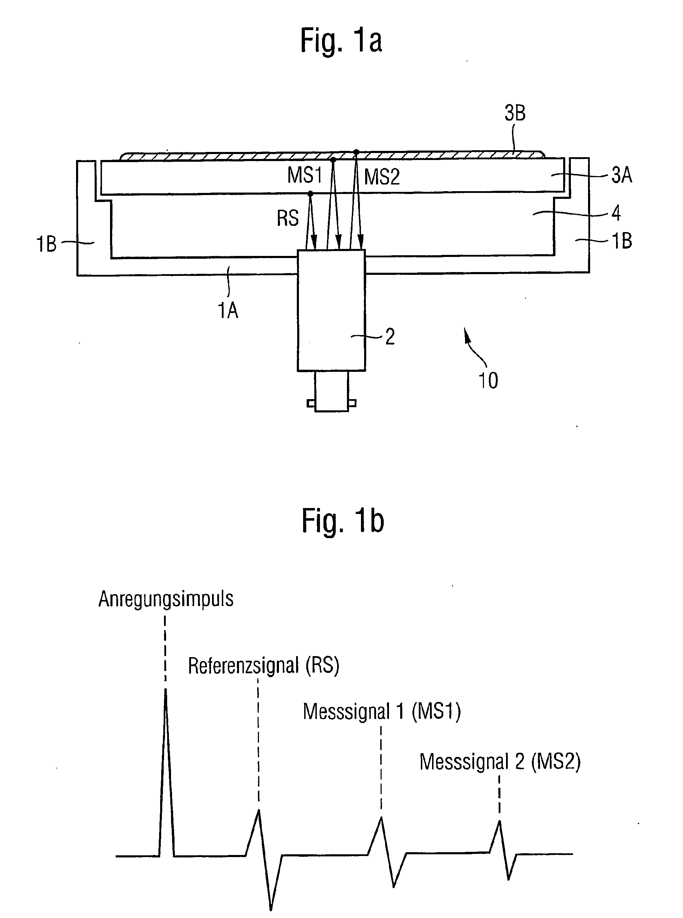

In der Fig. 1 ist ein erstes Ausführungsbeispiel für eine Messzelle 10 in einem Querschnitt dargestellt, welche in eine Vorrichtung zur künstlichen Bewitterung, eingesetzt werden kann.

Eine Messzelle 10 gemäß dem ersten Ausführungsbeispiel weist ein Bodenteil 1A auf, an das gegenüberliegende Seitenteile 1B angesetzt sind. In dem Bodenteil 1A ist eine (wie dargestellt beispielsweise zentrale) Bohrung geformt, in die ein Ultraschallwandler 2 eingesetzt ist. Die Seitenteile 1B sind in ihren oberen Abschnitten derart geformt, dass ein flächiges Substrat 3A mit einer darauf aufgebrachten Probe 3B, insbesondere einer Polymer- oder Lackschicht dem Ultraschallwandler 2 in einem bestimmten Abstand gegenüberliegend in die Seitenteile 1B eingesetzt werden kann. Alternativ dazu kann auch eine flächige Probe selbst, ohne Verwendung eines Substrates, in die Seitenteile 1B eingesetzt werden. In den Innenraum der Messzelle 10, also zwischen dem Substrat 3A und dem Bodenteil 1A bzw. dem Ultraschallwandler 2 ist ein Koppelmedium 4, insbesondere eine Koppelflüssigkeit wie beispielsweise Wasser, eingefüllt.

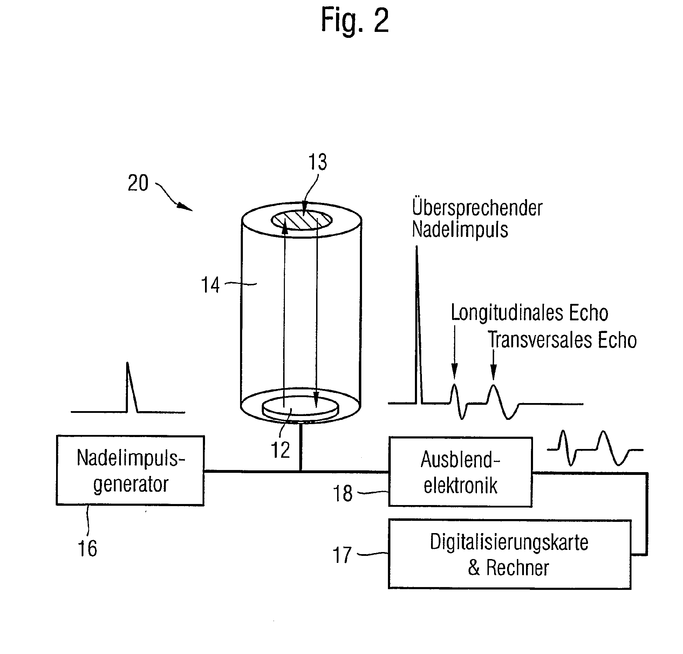

Anstelle des Koppelmediums kann auch eine Schallverzögerungsstrecke zwischen longitudinalen und transversalen Schallwellen zwischen dem Ultraschallwandler 2 und dem Substrat 3A angeordnet werden (s. Fig.2 und Beschreibung hierzu). Es kann auch das Koppelmedium selbst so gewählt sein, dass es als Schallverzögerungsstrecke zwischen longitudinalen und transversalen Schallwellen wirkt. Schließlich kann sowohl ein Koppelmedium als auch eine Schallverzögerungsstrecke angeordnet werden, wie weiter unten noch näher ausgeführt werden wird.

Das Substrat 3A kann außerhalb der Messzelle und der Bewitterungskammer mit der Polymerschicht 3B beschichtet werden und kann insbesondere durch ein praxisnahes und billiges Substrat gegeben sein, wie es üblicherweise für den konventionellen Einsatz in Bewitterungsprüfgeräten verwendet wird. Insbesondere kann in Fig. 1a das durch das Bodenteil 1A und die Seitenteile 1B gebildete Aufnahmeteil derart dimensioniert sein, dass bestimmte gängige Normgrößen von Substraten 3A in die Seitenteile 1B eingesetzt werden können. Das Substrat kann nach erfolgter Beschichtung mit der zu bewitternden und zu analysierenden Lackschicht in die Messzelle eingesetzt werden. Vorzugsweise ist die Bewitterungskammer mehrkanalig ausgelegt und weist dementsprechend eine Mehrzahl von Messzellen auf, in die eine entsprechende Mehrzahl von lackbeschichteten Substraten eingesetzt werden kann.

Die Ankoppelung des Substrates 3A an den Ultraschallwandler 2 erfolgt durch das bereits genannte Koppelmedium 4. Dieses sollte aus Gründen der Reproduzierbarkeit und der Vermeidung unerwünschter überlappender Mehrfachechos eine bestimmte Mindestdicke aufweisen.

In der Fig. 1b sind die relevanten elektrischen Impulse und Signale eines Messvorgangs dargestellt, wie sie beispielsweise durch eine mit der Messzelle 10 verbundene Auswerteelektronik gemessen werden können. Der Ultraschallwandler 2 wird durch einen kurzen elektrischen Anregungsimpuls zur Aussendung eines Ultraschallimpulses angeregt. Dieser Anregungsimpuls wird als übersprechender Impuls von der Auswerteelektronik registriert. Der Ultraschallwandler 2 strahlt einen kurzen Ultraschallimpuls in die zur Ankopplung benutzte Flüssigkeitsschicht ein. Die Ultraschallwelle durchläuft die Flüssigkeit und trifft auf die Unterseite des Substrates 3A. An dieser Stelle wird sie teilweise zum Ultraschallwandler 2 zurück reflektiert. Dieses Reflexionssignal kann zur Kalibrierung benutzt werden und stellt somit ein Referenzsignal RS dar. Zum anderen durchläuft die Ultraschallwelle das Substrat 3A und trifft dann auf die Unterseite der Lackbeschichtung 3B, von wo sie ebenfalls teilweise zum Ultraschallwandler 2 zurück reflektiert wird. Dieses Signal ist das erste Messsignal MS1. Die Amplitude dieses Messsignals MS1 hängt vom Bewitterungszustand des Lackes ab. Des Weiteren durchläuft die Ultraschallwelle ebenso die Lackschicht 3B und wird an ihrer oberen Oberfläche ebenfalls teilweise zum Ultraschallwandler zurück reflektiert. Dieses Signal kann als zweites Messsignal MS2 detektiert und für die Auswertung verwendet werden.

In der Fig. 2 ist ein zweites Ausführungsbeispiel für eine Messzelle zusammen mit der Ansteuer- und Auswerteelektronik schematisch dargestellt.

Die Messzelle 20 weist hier einen aus (Quarz-)Glas oder Metall bestehenden zylindrischen Hauptkörper 14 auf, auf dessen erster Grundfläche ein Ultraschallwandler 12 aufgebracht ist und auf dessen zweiter Grundfläche eine Probe 13, beispielsweise in Form einer Polymer- oder Lackschicht, aufgebracht ist. Diese Anordnung ist ebenfalls in dem weiter oben genannten Buch "Handbuch der Kunststoffprüfung" im Bild 10.7 a) dargestellt und im zugehörigen Beschreibungstext erläutert.

Das mit dieser Messzelle 20 durchzuführende Messverfahren, bei dem gleichzeitig Longitudinal- und Schubmodul der Probe 13 bestimmt werden können, beruht im Wesentlichen auf der Reflexion von Ultraschallwellen an der Grenzfläche zwischen dem Glaszylinder 14 und der Probe 13. Der Ultraschallwandler 12 ist vorzugsweise ein speziell geschnittener LithiumniobatWandler, mit dem bei Anregung durch einen kurzen elektrischen Impuls gleichzeitig eine Longitudinalwelle und eine Transversalwelle abgestrahlt werden. Da es beim schrägen Einfall einer Longitudinalwelle auf eine Grenzfläche zu unerwünschter Modenumwandlung kommt, werden die Wellen wie dargestellt senkrecht auf die Grenzfläche eingestrahlt. Die Longitudinalwelle und die Transversalwelle weisen in dem Glaszylinder 14 unterschiedliche Ausbreitungsgeschwindigkeiten auf, so dass der Glaszylinder 14 für die langsamere der beiden Wellen als Verzögerungsstrecke wirkt. Nach der Durchquerung durch den Glaszylinder 14 werden die Ultraschallsignale an der Grenzfläche Glaszylinder/Probe reflektiert und erfahren hierbei jeweils eine Amplitudenänderung und eine Phasenverschiebung in Abhängigkeit von dem Longitudinalmodul und dem Schubmodul der Probe 13. An dem Ultraschallwandler 12 werden beide reflektierten Impulse wieder in ein elektrisches Signal zurückverwandelt, wobei sie aufgrund unterschiedlicher Ausbreitungsgeschwindigkeiten zeitlich getrennt sind. Das elektrische Signal wird danach digitalisiert und der Auswertung zugeführt. Da der volle Sendeimpuls an der Empfangselektronik anliegt, muss er mittels einer speziellen Schaltung 18 ausgeblendet werden, um das Übersteuern bzw. die Zerstörung des nachfolgenden Verstärkers zu vermeiden. Das elektrische Signal wird danach in der Auswerteelektronik 17 digitalisiert, mittels Fenstertechniken aufgetrennt und der Auswertung zugeführt.

Der in Fig.1a gezeigte Ultraschallwandler 2 kann durch einen einfachen Lithiumniobatwandler gebildet sein, der beispielsweise in einem Gehäuse in geeigneter Weise auf einem Substrat angeordnet ist. Wie bereits angedeutet, können jedoch auch die in den Figuren 1a und 2 gezeigten Messzellen-Konzepte, insbesondere das Koppelmedium und die Verzögerungsstrecke, in geeigneter Weise miteinander kombiniert werden. Der Ultraschallwandler 2 der Fig.1a kann demgemäß wie in Fig.2 durch einen als Verzögerungsstrecke wirkenden Glaszylinder mit einem auf der unteren Stirnfläche aufgebrachtem Lithiumniobatwandler gebildet sein. Dieser Glaszylinder könnte in dem in der Fig.1a gezeigten Gehäuse untergebracht sein. Auf diese Weise wäre es auch mit der Messzelle der Fig.1a möglich, die in dem Lithiumniobatwandler erzeugten Longitudinal- und Transversalwellen in dem Glaszylinder zeitlich voneinander zu trennen und ihre entsprechenden reflektierten Signale zeitlich getrennt zu detektieren.

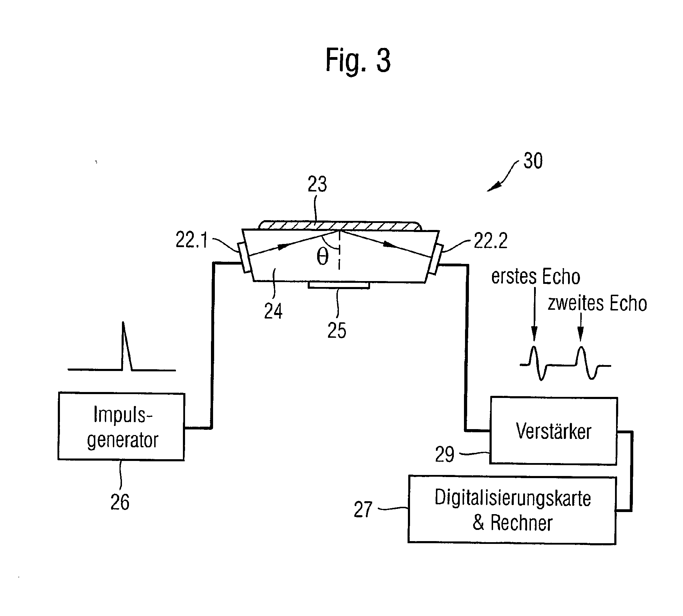

In der Fig. 3 ist ein drittes Ausführungsbeispiel für eine Messzelle 30 und die zugehörige Ansteuer- und Auswerteelektronik schematisch dargestellt.

Die Messzelle 30 weist einen Hauptkörper 24 auf, welcher aus (Quarz-)Glas oder Metall hergestellt sein kann. Der Hauptkörper 24 weist zwei gegenüberliegende Hauptoberflächen auf, die durch abgeschrägte Seitenflächen miteinander verbunden sind. Auf die obere Hauptoberfläche ist eine Probe 23, insbesondere eine Polymer- oder Lackschicht aufgebracht, während auf die untere Hauptoberfläche ein flächiger Temperatursensor 25 aufgebracht sein kann. Auf einer ersten Seitenfläche ist ein Sende-Ultraschallwandler 22.1 und auf einer zweiten Seitenfläche ist ein Empfangs-Ultraschallwandler 22.2 aufgebracht. Diese Anordnung ist in dem weiter oben genannten Buch "Handbuch der Kunststoffprüfung" in dem Bild 10.7b) beschrieben und in dem zugehörigen Beschreibungstext erläutert.

Die beiden Ultraschallwandler 22.1 und 22.2 fungieren in dieser Messzelle 30 als reine Scherwellenwandler. Der Sende-Ultraschallwandler 22.1 wird von dem Impulsgenerator 26 durch einen kurzen elektrischen Impuls angeregt und emittiert daraufhin einen kurzen Ultraschalltransversalwellen-Impuls. Dieser fällt schräg auf die Grenzfläche zwischen dem Hauptkörper 24 und der Probe 23 und wird dort reflektiert. Damit es hierbei nicht zu unerwünschter Umwandlung von Transversal- in Longitudinalwellen kommt, muss die Welle parallel zur Grenzfläche polarisiert sein. Der Reflexionskoeffizient und die Phasenverschiebung des reflektierten Impulses hängen von den mechanischen Eigenschaften der Probe ab. Die reflektierte Welle wird dann von dem Empfangs-Ultraschallwandler 22.2 in ein elektrisches Signal zurückverwandelt, in einem Verstärker 29 verstärkt, digitalisiert und in der Auswerteelektronik 27 ausgewertet.

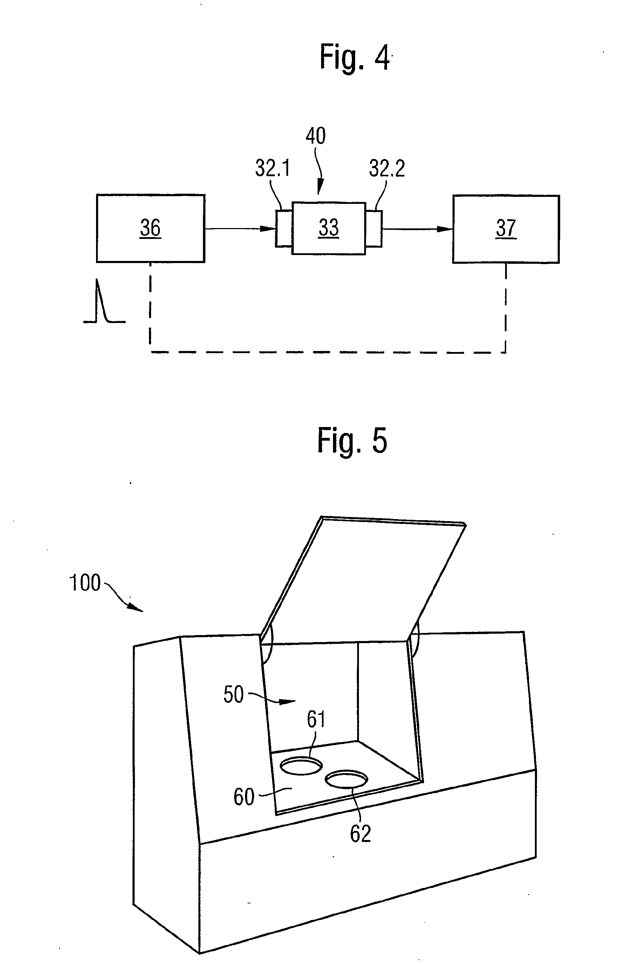

In der Fig. 4 ist ein viertes Ausführungsbeispiel für eine Messzelle 40 dargestellt, mit der ein reines Ultraschalltransmissions-Verfahren durchgeführt wird. Die Messzelle 40 weist einen Sende-Ultraschallwandler 32.1 und einen Empfangs-Ultraschallwandler 32.2 auf, zwischen denen die Probe 33 angeordnet wird. Der Sende-Ultraschallwandler 32.1 wird von einem Nadelimpulsgenerator 36 angeregt und sendet darauf hin einen kurzen Ultraschallimpuls in die Probe 33. Der Empfangs-Ultraschallwandler 32.2 empfängt den transmittierten Ultraschallimpuls und wandelt diesen in ein elektrisches Signal um und führt dieses der Auswerteelektronik 37 zu.

Eine derartige Messzelle 40 kann im Prinzip ebenfalls in einer Bewitterungskammer untergebracht sein.

In der Fig. 5 ist schließlich noch ein nicht zur Erfindung gehörendes Ausführungsbeispiel für eine Vorrichtung in der Form eines Bewitterungsgeräts mit feststehenden Proben dargestellt. Das Bewitterungsgerät 100 weist eine Bewitterungskammer 50 auf, in deren Innerem Werkstoffproben wie Polymer- oder Lackschichten bestimmungsgemäß bewittert werden sollen. Zu diesem Zweck ist innerhalb der Bewitterungskammer 50, vorzugsweise an einer den Werkstoffproben gegenüberliegenden Wand, mindestens eine UV-Strahlungsquelle befestigt (nicht dargestellt). Die Bewitterungskammer 50 weist eine untere begrenzende Bodenwand 60 auf, in die Öffnungen 61 und 62 geformt sind. In diesen Öffnungen 61 und 62 können, wie im vorliegenden Ausführungsbeispiel angedeutet ist, Messzellen beispielsweise entsprechend dem in der Fig. 2 gezeigten zweiten Ausführungsbeispiel gehaltert sein. Auf die obere Grundfläche der zylindrischen Hauptkörper dieser Messzellen können Polymer- oder Lackschichten abgeschieden sein. Die UV-Strahlungsquelle kann an der gegenüberliegenden oberen Wand montiert sein, so dass die zu bewitternden Schichten der UV-Strahlungsquelle direkt gegenüberstehen. Die Proben werden einem Bewitterungsprozess untergezogen und gleichzeitig können Ultraschallanalyseverfahren wie vorstehend beschrieben an ihnen durchgeführt werden.

Die vorstehende Beschreibung beinhaltet, dass der Ultraschall außerhalb der Bewitterungskammer 50 erzeugt wird und durch die Öffnungen 61,62 in die Bewitterungskammer 50 zu den Proben gelangt, wobei sich innerhalb einer Öffnung 61,62 beispielsweise der Hauptkörper 14 der Messzelle 20 der Fig.2 befindet. Es kann jedoch auch bei dem Bewitterungsgerät 100 der Fig.5 vorgesehen sein, dass eine Messzelle oder zumindest der Ultraschallwandler vollständig innerhalb der Bewitterungskammer angeordnet ist und die Öffnungen 61,62 lediglich Durchführungen durch die Wand der Bewitterungskammer 50 für elektrische Leitungen bilden.

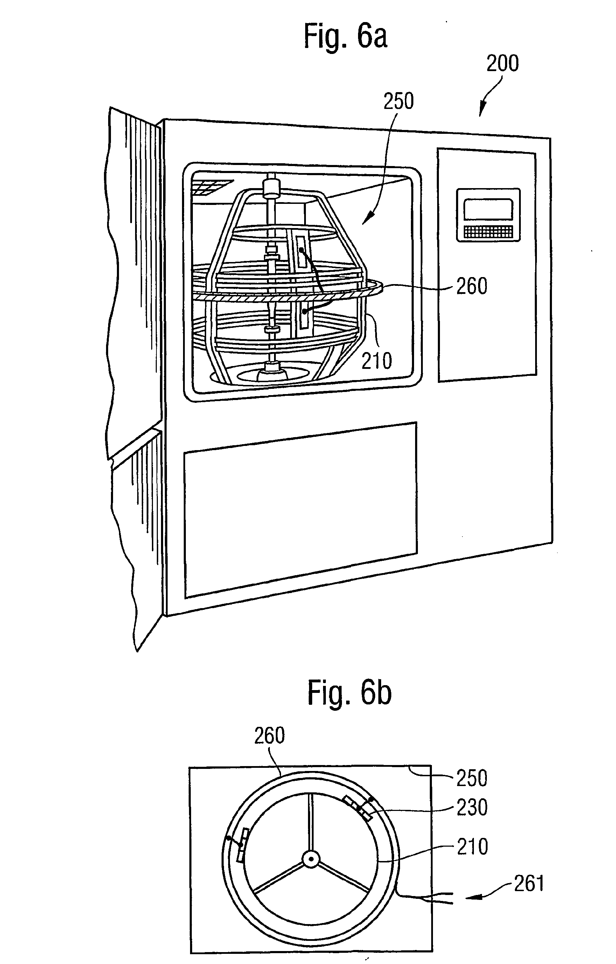

Bei den erfindungsgemäßen Bewitterungsgeräten ist es notwendig, dass sich die Ultraschallwandler innerhalb der Bewitterungskammer befinden. Ein Ausführungsbeispiel hierfür ist in der Fig.6a, b in der Form eines Bewitterungsgeräts mit ortsveränderlichen Proben perspektivisch (a) und in einer Draufsicht (b) dargestellt. Das Bewitterungsgerät 200 weist eine Bewitterungskammer 250 auf, innerhalb der ein Probengestell (Rack) 210 drehbar um eine UV-Strahlungsquelle gelagert ist. Die Proben 230 werden an dem Probengestell befestigt, welches mit konstanter Drehgeschwindigkeit um die UV-Strahlungsquelle rotiert. Mithilfe der Drehbewegung können räumliche Inhomogenitäten innerhalb der Bewitterungskammer 250, etwa solche des UV-Strahlungsfeldes oder anderer darin_herrschender Bewitterungsbedingungen ausgeglichen werden. Die Proben weisen beispielsweise Substrate auf, auf deren Vorderseite eine Lackbeschichtung aufgebracht ist, welche bewittert und analysiert werden soll. Auf der Rückseite der Substrate sind Ultraschallwandler aufgebracht und elektrisch kontaktiert. Um das Probengestell 210 herum ist eine ringförmige Schleifkontaktanordnung 260 montiert, durch die eine der Anzahl der zu versorgenden Ultraschallwandler entsprechende Anzahl Schleifkontaktschienen gehaltert ist. Jeder Ultraschallwandler ist durch ein Kabel mit einem Schleifkontakt verbunden, der in der zugehörigen Schleifkontaktschiene geführt wird. Die Schleifkontaktschienen werden mittels einer in der Wand der Bewitterungskammer 250 geformten Durchführung 261 nach außen geführt und mit der Ansteuerelektronik verbunden

## Patentansprüche

1. Bewitterungsgerät (200) zur künstlichen Bewitterung einer Probe und zur simultanen Durchführung eines Ultraschallanalyseverfahrens zur Feststellung der Veränderung von Eigenschaften der Probe und/oder der Probenoberfläche und/oder innerer oder äußerer Grenzflächen, mit
- einer Bewitterungskammer (250) zur Aufnahme und Halterung der zu bewitternden Probe (230), wobei die Bewitterungskammer (250) mit einer Ultraschallanalyse-Einrichtung gekoppelt ist, welche mindestens einen Ultraschallwandler zum Aussenden und/oder Empfangen von Ultraschallwellen aufweist, wobei
- in einer Wand (60) der Bewitterungskammer (250) eine Öffnung (261) für den Durchtritt von Signalen, insbesondere elektrischen Signalen, und zur Erzeugung und/oder Wandlung von Ultraschall innerhalb der Bewitterungskammer (250) geformt ist,
**dadurch gekennzeichnet, dass**
- die zu bewitternde Probe (230) während der Bewitterung ortsveränderlich ist, mit einem Ultraschallwandler verbunden ist, der Ultraschallwandler mit einer Schleifkontaktanordnung (260) verbunden ist und elektrische Signale von und zu der Schleifkontaktanordnung (260) durch die Öffnung (261) geführt werden.

2. Bewitterungsgerät nach Anspruch 1,
**dadurch gekennzeichnet, dass**
- die Ultraschallanalyse-Einrichtung genau einen Ultraschallwandler zum Aussenden von Ultraschallwellen in Richtung auf die Probe und zum Empfangen von von der Probe reflektierten Ultraschallwellen aufweist.

3. Bewitterungsgerät nach Anspruch 1,
**dadurch gekennzeichnet, dass**
- die Ultraschallanalyse-Einrichtung einen ersten Ultraschallwandler (22.1) zum Aussenden von Ultraschallwellen und einen zweiten Ultraschallwandler (22.2) zum Empfangen von Ultraschallwellen aufweist.

4. Bewitterungsgerät nach Anspruch 2,
**gekennzeichnet durch**
- eine Messzelle (10) aufweisend ein Bodenteil (A) und Seitenteile (B), wobei in dem Bodenteil (1A) eine Bohrung für den Einsatz des Ultraschallwandlers (2) vorgesehen ist oder der Ultraschallwandler (2) akustisch an die Bodenplatte angekoppelt wird und das Bodenteil (1A) durchschallt wird, und in wobei in die Messzelle (10) gegenüberliegend dem Bodenteil (1A) eine flächige Probe oder ein die Probe (3B) tragendes flächiges Substrat (3A) in die Seitenteile (1B) einsetzbar ist.

5. Bewitterungsgerät nach einem der Ansprüche 1 bis 4,
**dadurch gekennzeichnet, dass**
- zwischen den Ultraschallwandler (2) und der Probe (3B) ein oder mehrere Koppelmedien, insbesondere eine Koppelflüssigkeit (4), und/oder Schallverzögerungsstrecken oder Substrate angeordnet sind.

6. Vorrichtung nach Anspruch 2,
**gekennzeichnet durch**
- eine Messzelle (20) aufweisend einen zylindrischen, insbesondere aus (Quarz-)Glas oder Metall gebildeten, Hauptkörper (14), auf dessen erster Grundfläche der Ultraschallwandler (12) aufgebracht ist, und dessen zweite Grundfläche als Aufnahmefläche für die Probe (13) dient.

7. Bewitterungsgerät nach Anspruch 3,
**gekennzeichnet durch**
- eine Messzelle (30) aufweisend einen insbesondere aus (Quarz-)Glas oder Metall gebildeten, Hauptkörper (24), welcher zwei gegenüberliegende Hauptoberflächen aufweist, deren eine als Aufnahmefläche für die Probe (23) dient, und welcher zwei die Hauptoberflächen verbindende abgeschrägte Seitenflächen aufweist, auf denen die zwei Ultraschallwandler (22.1,22.2) aufgebracht sind.

## Claims

1. Weathering tester (200) for subjecting a sample to artificial weathering tests and for simultaneously carrying out an ultrasound analysis method for ascertaining the change in properties of the sample and/or the sample surface and/or internal or external boundary surfaces, comprising
- a weathering chamber (250) for accommodating and holding the sample (230) to be subjected to weathering tests, wherein the weathering chamber (250) is coupled to an ultrasound analysis device having at least one ultrasonic transducer for transmitting and/or receiving ultrasound waves, wherein
- an opening (261) is formed in a wall (60) of the weathering chamber (250) for allowing signals, in particular electrical signals, to pass through and for generating and/or converting ultrasound inside the weathering chamber (250), **characterized in that**
- the sample (230) to be subjected to weathering tests is positionally variable during weathering testing, is connected to an ultrasonic transducer, the ultrasonic transducer is connected to a sliding contact arrangement (260) and electrical signals from and to the sliding contact arrangement (260) are passed through the opening (261).

2. Weathering tester according to Claim 1,
**characterized in that**
- the ultrasound analysis device has exactly one ultrasonic transducer for transmitting ultrasound waves in the direction of the sample and for receiving ultrasound waves that are reflected by the sample.

3. Weathering tester according to Claim 1,
**characterized in that**
- the ultrasound analysis device has a first ultrasonic transducer (22.1) for transmitting ultrasound waves and a second ultrasonic transducer (22.2) for receiving ultrasound waves.

4. Weathering tester according to Claim 2,
**characterized by**
- a measurement cell (10) having a base part (A) and side parts (B), wherein the base part (1A) has a hole for insertion of the ultrasonic transducer (2) or the ultrasonic transducer (2) is acoustically coupled to the base panel and ultrasound is transmitted through the base part (1A), and wherein, opposite the base part (1A), an areal sample or an areal substrate (3A) carrying the sample (3B) can be inserted into the measurement cell (10) into the side parts (1B).

5. Weathering tester according to one of Claims 1 to 4,
**characterized in that**
- one or more coupling media, in particular a coupling liquid (4), and/or sound delay sections or substrates are arranged between the ultrasonic transducer (2) and the sample (3B).

6. Apparatus according to Claim 2,
**characterized by**
- a measurement cell (20) having a cylindrical main body (14), in particular a main body formed from (silica) glass or metal, on whose first base face the ultrasonic transducer (12) is mounted and whose second base face serves as receiving area for the sample (13).

7. Weathering tester according to Claim 3,
**characterized by**
- a measurement cell (30) having a main body (24), in particular formed from (silica) glass or metal, which main body (24) has two opposite main surfaces, with one of them serving as a receiving area for the sample (23), and has two bevelled side faces connecting the main surfaces, on which bevelled side faces the two ultrasonic transducers (22.1, 22.2) are mounted.

## Revendications

1. Appareil d'exposition aux intempéries (200) pour l'exposition artificielle d'un échantillon et pour l'exécution simultanée d'un procédé d'analyse aux ultrasons pour la constatation de la modification des propriétés de l'échantillon et/ou de la surface de l'échantillon et/ou des surfaces limitrophes intérieures ou extérieures, comprenant :
- une chambre d'exposition aux intempéries (250) pour la réception et le maintien de l'échantillon (230) qui doit être exposé aux intempéries, dans laquelle la chambre d'exposition aux intempéries (250) est accouplée avec un dispositif d'analyse aux ultrasons qui présente au moins un transformateur d'ultrasons pour l'émission et/ou pour la réception des ondes d'ultrasons, dans laquelle
- une ouverture (261) est conformée dans une paroi (60) de la chambre d'exposition aux intempéries (250) pour la traversée des signaux, en particulier des signaux électriques, et pour la génération et/ou pour la conversion des ultrasons à l'intérieur de la chambre d'exposition aux intempéries (250),
**caractérisé en ce que**
- l'échantillon (230) qui doit être exposé aux intempéries peut se déplacer pendant l'exposition aux intempéries et qu'il est relié à un transformateur d'ultrasons, le transformateur d'ultrasons étant relié avec un agencement de contact en boucle (260) et **en ce que** les signaux électriques sont guidés depuis et vers l'agencement de contact en boucle (260) à travers l'ouverture (261).

2. Appareil d'exposition aux intempéries selon la revendication 1,
**caractérisé en ce que**
- le dispositif d'analyse aux ultrasons présente exactement un transformateur d'ultrasons pour l'émission des ondes d'ultrasons en direction de l'échantillon et pour la réception des ondes d'ultrasons qui sont réfléchies par l'échantillon.

3. Appareil d'exposition aux intempéries selon la revendication 1,
**caractérisé en ce que**
- le dispositif d'analyse aux ultrasons présente un premier transformateur d'ultrasons (22.1) pour l'émission des ondes d'ultrasons et un second transformateur d'ultrasons (22.2) pour la réception des ondes d'ultrasons.

4. Appareil d'exposition aux intempéries selon la revendication 2,
**caractérisé par** :
- une cellule de mesure (10) qui présente une partie de fond (A) et des parois latérales (B), dans laquelle un perçage est prévu dans la partie de fond (1A) pour l'utilisation du transformateur d'ultrasons (2) ou le transformateur d'ultrasons est couplé acoustiquement à la plaque de fond et la partie de fond (1A) est examinée aux ultrasons et dans laquelle, dans la cellule de mesure (10), il est possible d'utiliser un échantillon surfacique ou un substrat (3A) qui porte l'échantillon (3B) à l'opposé de la partie de fond (1A).

5. Appareil d'exposition aux intempéries selon l'une des revendications 1 à 4, **caractérisé en ce que** :
- entre le transformateur d'ultrasons (2) et l'échantillon (3B), un ou plusieurs moyens de couplage, en particulier un liquide de couplage (4) et/ou des trajets de retardement de son ou des substrats sont agencés.

6. Appareil d'exposition aux intempéries selon la revendication 2,
**caractérisé par** :
- une cellule de mesure (10) qui présente un corps principal cylindrique (14), qui est constitué en particulier de verre de quartz ou de métal, dont la première surface de base sert au montage des transformateurs d'ultrasons (12) et dont la seconde surface de base sert de surface de réception pour l'échantillon (13).

7. Appareil d'exposition aux intempéries selon la revendication 3,
**caractérisé par** :
- une cellule de mesure (30) qui présente un corps principal (24), qui est constitué en particulier de verre de quartz ou de métal et qui présente deux surfaces principales opposées dont l'une d'entre elles sert de surface de réception pour l'échantillon (23) et dont l'autre présente deux surfaces latérales en biais qui relient les surfaces principales et sur lesquelles les deux transformateurs d'ultrasons (22.1, 22.2) sont montés.
